# EUROPEAN PATENT APPLICATION

(11) **EP 1 533 749 A1**
(43) Date of publication of application: **25.05.2005**
(21) Application number: 03741141.0
(22) Date of filing: 01.07.2003
(51) Int. Cl.: G06K 19/10, G06K 19/08, G07D 7/12, B42D 15/10

(54) **MATERIAL CONTAINING CODING INFORMATION, METHOD OF IDENTIFICATION THEREOF AND IDENTIFICATION SYSTEM THEREFOR**

(30) Priority: 01.07.2002 JP 2002191882
(71) Applicant: Fukui, Shinya, Toyonaka-shi, Osaka 560-0002 (JP); Ikeda, Junji, Suita-shi, Osaka 564-0063 (JP)
(72) Inventor: Fukui, Shinya, Toyonaka-shi, Osaka 560-0002 (JP); Ikeda, Junji, Suita-shi, Osaka 564-0063 (JP)
(74) Representative: Viering, Hans-Martin, Dipl.-Ing.
(86) International application number: PCT/JP2003/008335
(87) International publication number: WO 2004/003839

(57) **Abstract**

A material containing coding information which enables increasing the storage capacity of coding information, enables containing coding information in such a form that third parties cannot decode the coding information and accordingly enables preventing forgery and enhancing security. This material containing coding information comprises at least one element or a compound thereof and is provided with an information presenting substance having a first coding information associated therewith. Further, the material containing coding information is provided with coding information storing means for storing a second coding information that is identical with or different from the first coding information. Thus, not only the first coding information but also the second coding information can be contained in the material containing coding information, so that the capacity of coding information in the material containing coding information can be expanded. This material can contain coding information in such a form that third parties cannot decode the coding information by combining the first coding information with the second coding information.

## Description

### Field of the Invention

The present invention relates to a material containing coding information which has a specified coding information provided in a material such as plastic resin, paint, ink, fiber, paper, or metal and a method of identification thereof and an identification system therefor.

### Background of the Invention

A variety of data cards including credit cards and cash cards have been introduced on which encrypted information such as personal information is magnetically recorded. Most recently, advanced types of IC card are available having very small IC (integrated circuit) chips carrying various coding information and embedded in card forms; the coding information may be read out with the use of electric waves in a wireless type.

When large coding information is necessary, it is however difficult for a common IC chip to store an increasing amount of coding information. Also, the coding information may illegally be retrieved, deleted, or corrupted by a third person.

Those drawbacks are common to not only credit cards or cash cards protected with forgery inhibiting information but also checks, securities, paper money, brands, industrial products guaranteed with histories, food labels identified with producing location and time, and other encoding tagged materials.

It is hence an object of the present invention, in view of the foregoing drawbacks, to provide a material containing coding information in which the storage capacity of coding information is increased and protected from being illegally decoded, deleted, or corrupted by the third person thus to permit no forgery and improve the security and to provide a method of identification thereof and an identification system therefor.

### SUMMARY OF THE INVENTION

For achievement of the foregoing object of the present invention, a material containing coding information is provided as characterized by the information presenting substance consisting mainly of at least one element or a compound threreof and assigned with a first coding information and coding information storing means for storing a second coding information which is equal to or different from the first coding information.

The coding information may include not only a group of complex encryption determined by the parties of interest but also known characters, figures, symbols, and their combination.

Accordingly, as the material containing coding information has both the information presenting substance assigned with the first coding information and the coding information storing apparatus carrying the second coding information deposited thereon, the storage capacity of coding information in the material can be increased including the first and the second coding information.

Also, as the first coding information and the second coding information are deposited in a combination, they will hardly be decoded, deleted, or corrupted by the third person thus contributing to the improvement of the security.

The information presenting substance may be contained in the coding information storing means on the material containing coding information.

Accordingly, as the coding information storing means contains both the first coding information and the second coding information, its deposition on the coding information containing material can allows the first and the second coding information to be assigned to the material containing coding information.

The coding information storing means may be an integrated circuit memory.

Accordingly, the second coding information to be saved can be greater in the storage capacity than its saving in a magnetic mode, thus being protected from being decoded, deleted, or corrupted by the third person.

The coding information storage apparatus according to the present invention is provided as characterized by the information presenting substance consisting mainly of at least one element or a compound thereof and assigned with the first coding information and the second coding information which is equal to or different from the first coding information.

Accordingly, as the coding information storage apparatus contains both the first coding information and the second coding information, its mounting to the material can allow the material to be assigned with the first and second coding information.

The method, according to the present invention, of identifying the material containing coding information which includes the information presenting substance consisting mainly of at least one element or the compound thereof and assigned with the first coding information and the coding information storing means for storing the second coding information which is equal to or different from the first coding information, is provided comprising the steps of: exposing the material containing coding information to a predetermined wavelength range of electromagnetic wave, detecting fluorescent light emitted from the information presenting substance on the material when exposed to the electromagnetic wave, specifying the first coding information from the fluorescent light emitted from the information presenting substance, and retrieving the second coding information from the coding information storing means; and identifying the material containing coding information with reference to the first coding information from the information presenting substance and the second coding information from the coding information storing means.

Accordingly, this allows every analyzer to decode both the first coding information and the second coding information deposited on the material containing coding information with no difficulty thus to identify the material containing coding information easily and assuredly.

The system, according to the present invention, for identifying a material containing coding information which includes the information presenting substance consisting mainly of at least one element or the compound thereof and assigned with the first coding information and the coding information storing means for storing a second coding information which is equal to or different from the first coding information, is provided comprising: a reference table storing means for storing a reference table which determines the relationship between the first coding information and the information presenting substance; a detecting means for detecting fluorescent light emitted from the information presenting substance on the material containing coding information which exposed to the predetermined wavelength range of electromagnetic wave; the information presenting substance specifying means for specifying the information of the information presenting substance from the fluorescent light emitted from the information presenting substance and detected by the detecting means; a coding information specifying means for specifying the first coding information corresponding to the information of the information presenting substance specified by the information presenting substance specifying means through examining the reference table storing means; a coding information reading means for retrieving the second coding information from the coding information storing means; and an identifying means for identifying the material containing coding information from a combination of the first coding information specified by the coding information specifying means and the second coding information retrieved by the coding information reading means.

Accordingly, this allows every analyzer to decode both the first coding information and the second coding information deposited on the material containing coding information with no difficulty thus to identify the material containing coding information easily and assuredly.

### BRIEF DESCRIPTION OF THE DRAWINGS

Fig. 1 is a perspective view of the material containing coding information showing one embodiment of the present invention;
Fig. 2A illustrates an example of the reference table;
Fig. 2B illustrates an example of the reference table;
Fig. 2C illustrates an example of the reference table;
Fig. 2D illustrates an example of the reference table;
Fig. 3 is a spectrum diagram showing a result of the emission of fluorescent light from the information presenting substance;
Fig. 4 is a schematic view of an identification system for the material containing coding information;
Fig. 5 is a view showing a hardware arrangement of the computer shown in Fig. 4; and
Fig. 6 is a flowchart showing steps of a method of identifying the material containing coding information.

### DETAILED DESCRIPTION OF THE PREFERRED EMBODIMENT

A material containing coding information (A) according to one embodiment of the present invention will be described.

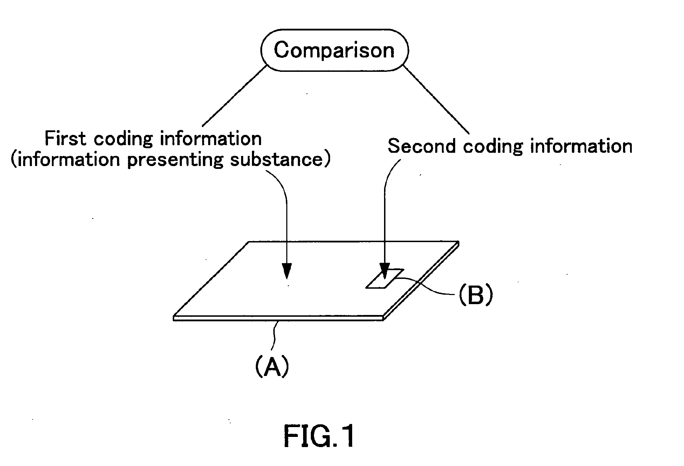

The material containing coding information (A) includes, as shown in Fig. 1, the information presenting substance consisting mainly of at least one element or the compound thereof and assigned with the first coding information. The material containing coding information (A) is also accompanied with a coding information storing apparatus (B) carrying the second coding information which is equal to or different from the first coding information. The material containing coding information (A) will be referred to simply as a material (A) hereinafter regardless of the joining with the coding information.

The material (A) is selected from plastic resins, paints, ink, paper, fiber, and metals for implementing credit cards, cash cards,checks,securities,paper money,brands,industrial products, food labels, etc. Fig. 1 illustrates cards form such as a credit card or a cash card.

The information presenting substance is preferable to be composed of at least one element which are rarely found in the commonly available materials or the compound thereof (including oxide, sulfide, and organic complex) when an X-ray range of fluorescent light is used for the identification.

More particularly, the elements which are rarely found in the commonly available materials may be specified by the atomic numbers from 31 to 88; preferably lanthanoid, more preferably, neodymium (Nd), promethium (Pm), samarium (Sm), europium (Eu), gadolinium (Gd), terbium (Tb), holmium (Ho), and their combination of two or more.

Those elements are rarely found in the plastic resins, the paints, the ink, the paper, the fiber, and the metals and can easily be identified by spectrum analysis. Also, while the elements are economical and sanitary, they are easily available in their oxide form.

Alternatively, as arranged to be exposed to a beam of light ranging from infrared light to ultraviolet light for the identification, the information presenting substance may preferably be at least one element or the compound thereof which has a spectrum of narrow wavelengths.

The element or the compound which has a linear spectrum with narrow wavelengths may be selected from a single crystal doped with a transition element having 3d orbitals and/or a rare-earth element having 4f orbitals, a glass doped with a transition element having 3d orbitals and/or a rare-earth element having 4f orbitals, and a complex doped with a transition element having 3d orbitals and/or a rare-earth element having 4f orbitals. When the information presenting substance is exposed to an electromagnetic wave at a specified wavelength range, preferably an electromagnetic wave ranging from ultraviolet light to infrared light, or more preferably an electromagnetic wave ranging from visible light to near-infrared light, it emits a linear spectrum of fluorescent light which is narrow in the energy width and high in the energy level and can thus be identified at higher accuracy.

The information presenting substance may be contained in the material (A) through a known chemical bonding technique such as polymerization, bridging, or ion bonding or coated over the surface of the material (A), other than doped in the material (A).

The method of containing the information presenting substance in the material (A) is of no limitations and may be determined depending on the type of the information presenting substance. For example, when the material (A) is the plastic resin, its containment of the information presenting substance may be implemented by a direct forming method following the dry blending in a drum tumbler, a compounding process with an extruder, or a compounding or shaping with the use of an internal mixer or heating rollers. Alternatively, it may be carried out through a master batch technique. The containment of the information presenting substance in the material (A) may employ a lubricant of fatty acid amide, fatty acid metal salt, or fatty acid ester for having a uniform of concentration and dispersion. Also, two or more of the information presenting substances may be contained in the material (A) separately or simultaneously.

The information presenting substance may preferably be controlled to such a small amount that its nature provides no or minimum intrinsic affection on the external appearance and physical properties of the material (A).

The small amount of the information presenting substance for providing no or minimum affection on the properties of the material (A) may vary depending on its nature. The preferable range of the information presenting substance in the material (A) is from 0.1ppm to 1000 ppm (including 0.1 ppm and 1000 ppm), and the more preferable range is from 0.5 ppm to 200 ppm (including 0.5 ppm and 200 ppm).

Not smaller than 0.1 ppm is desired in view of the accuracy of measurement in this currently available technology. Not greater than 1000 ppm is determined for not seriously affecting the external appearance and physical properties of the material (A). The range from 0.5 ppm to 200 ppm is more preferable in order to enhance the reliability of the measurement, minimize the financial burden, and ensure a minimum affection on the intrinsic properties of the material (A).

Although the information presenting substance is deposited directly on the material (A) in this embodiment, it may be contained in the coding information storing apparatus (B) allocated on the material (A). For example, the information presenting substance is contained in the coding information storing apparatus (B) made of ink, forming material, or circuit forming material and then both are provided on the material (A). This allows the coding information storing apparatus (B) to carry both the first coding information and the second coding information. Accordingly, when tagged with the coding information storing apparatus (B), the material (A) can contain both the first coding information and the second coding information.

Also, the information presenting substance may be utilized to fabricate an integrated circuit memory as the coding information storing means. Accordingly, even if all information in the integrated circuit memory has been deleted, the information presenting substance can perpetually hold the coding information.

Moreover, the information to be saved in the information presenting substance in the material (A) can be read with no direct contact with the material (A).

The first coding information and the second coding information are of no limitations and may be determined depending on the application of the material (A). For example, in the material (A) is used as a credit card or a cash card, the coding information may be a combination of user information and identification number. When the material (A) is used as a check, securities, or a paper money, its coding information may be an identification number or marking for exhibiting the authenticity. With the material (A) of a product with a brand name, the coding information may include an identification number, a manufacturer's name, a production history, materials, and other relevant information. With the material (A) of an industrial product, the coding information may include an identification number, a manufacturer's name, a production history, materials, and relevant information of each component or material. With a food label of the material (A), the coding information may include the location and manufacturing time of foods.

The first coding information assigned to the information presenting substance incorporates information about the information presenting substance (referred to as information presenting substance information hereinafter). The information presenting substance information includes the type, amount, spectrum data, attenuation with time, and their combination of the information presenting substance.

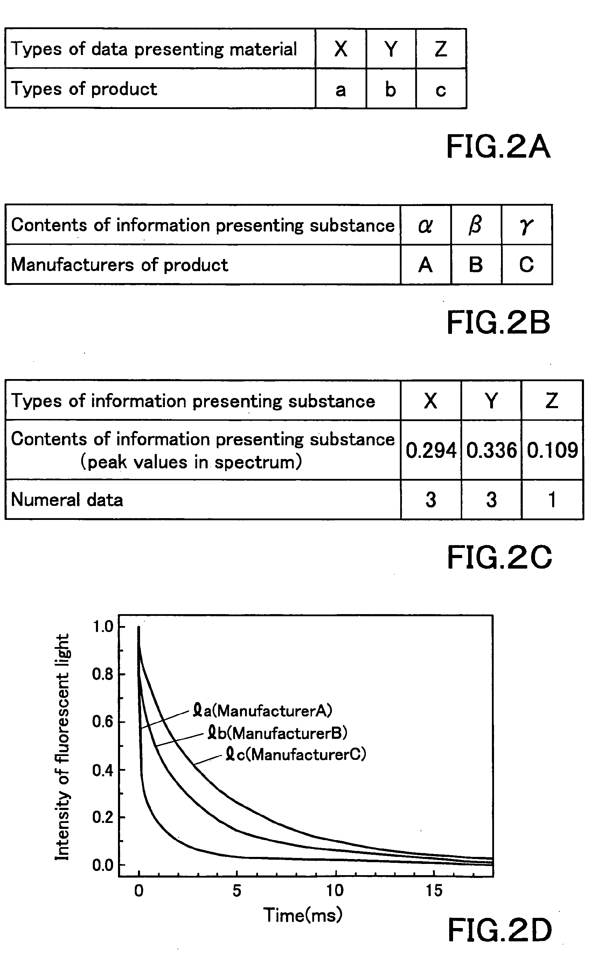

It is assumed, as shown in Fig. 2A, that the information presenting substance information is classified into three different types (X, Y, and Z) of the information presenting substance. When the first coding information is assigned to three different products (a, b, and c), the three types (X, Y, and Z) of the information presenting substance represent the three products (a, b, and c) respectively. Accordingly, the products (a, b, and c) can readily be identified upon detection of their corresponding types (X, Y, and Z) of the information presenting substance in the material (A) of interest.

It is also assumed, as shown in Fig. 2B, that the information presenting substance information is classified into three different amounts (α, β, and γ) of the information presenting substance. When the first coding information is assigned to three different manufacturers (A, B, and C) of the products, the three amounts (α, β, and γ) of the information presenting substance represent the three manufacturers (A, B, and C) respectively. Accordingly, the manufacturers (A, B, and C)ₒcan easily be identified upon detection of their corresponding amounts (α, β, and γ) of the information presenting substance in the material.

It is assumed, as shown in Fig. 2C, that the information presenting substance information is classified into three different types (X, Y, and X) of the information presenting substance associated with their amounts. When the first coding information is assigned to a value consisting two or more digits, the digits of the value represent the three types (X, Y, and Z) of the information presenting substance respectively. Also, the figure of each digit represents the amount of the information presenting substance in the material (A). Accordingly, the digits of the value as the first coding information can readily be specified upon detection of their corresponding types (X, Y, and Z) and amounts of the information presenting substance in the material (A). In other words, the first coding information may carry more information as being handled like a bar code. As the first coding information consists of two or more digits of the value, it may represent more information of the product. Each of the digits of the values shown in Fig. 2C is the (peak) amount of the information presenting substance in the material which is multiplied by 10 and rounded.

It is assumed, as shown in Fig. 2D, that the information presenting substance information is classified into three different profiles (1a, 1b, and 1c) of the attenuation with time of the information presenting substance. When the first coding information is assigned to three different manufacturers (A, B, and C), the three profiles (1a, 1b, and 1c) of the attenuation with time of the information presenting substance represent the three manufacturers (A, B, and C) respectively. Accordingly, the manufacturers (A, B, and C) can readily be identified upon detection of their corresponding profiles (1a, 1b, and 1c) of the attenuation with time of the information presenting substance in the material (A) of interest. In this example, the attenuation with time of the information presenting substance is the attenuation in the intensity of fluorescent light from the information presenting substance along the horizontal axis representing the time (Fig. 2D illustrating three different profiles of the attenuation with time of the information presenting substance).

The coding information storing apparatus (B) is not limited to one particular memory type but may be selected from various types including magnetic memories and integrated circuit memories (IC memories). Preferably, the IC memory is greater in the storage capacity and more difficult in the decoding, deletion, and corruption of the coding information than any magnetic memory, thus inhibiting the forgery of a proprietary card. The IC memory may be preferably equipped with an antenna for emitting the coding information as its size is commonly minimized to hardly disturb the external appearance of the material (A). Preferably, the saved information (the second coding information) of the coding information storing apparatus (B) can be read with no direct contact with the coding information storing apparatus (B).

The coding information storing apparatus (B) may be arranged so that the second coding information is modified or added with extra information. Preferably, the reading of the second coding information for modification can be conducted with no direct contact with the coding information storing apparatus (B).

The second coding information in the coding information storing apparatus (B) may be equivalent to or different from the first coding information of the information presenting substance. The second coding information can be determined corresponding to the application of the material (A).

The first coding information of the information presenting substance may be used as a single encryption or cooperated with the second coding information saved in the coding information storing apparatus.

The first coding information of the information presenting substance may be used together with another digital data assigned with a pigment or a coloring agent by a known manner to construct a more complex of encryption.

Moreover, the first coding information of the information presenting substance may be cooperated with another biophysical information such as finger prints or venous patterns.

As described above, both the information presenting substance assigned with the first coding information and the coding information storing apparatus (B) stored the second coding information are deposited on the material (A). Since the material (A) contains the first and the secondcoding information, the storage capacity of coding information in the material (A) can be increased.

Also, both the first coding information and the second coding information are combined together and can hardly be decoded, deleted, or corrupted by any third person. More specifically, even if the first coding information and the second coding information are different from each other and the latter in the coding information storing apparatus (B) is decoded, deleted, or corrupted by the third person, the first coding information remains intact thus protecting the material (A) from being assaulted by the third person. It is essential for decoding the first coding information to clearly acknowledge the relationship between the first coding information and the information presenting substance. This positively prevents the third person from decoding the first coding information. Accordingly, the material (A) can be improved in the security as its forgery is hardly feasible.

As the second coding information is saved in the coding information storing apparatus (B), it is deposited at simply a point on the material (A). On the other hand, the first coding information is normally deposited throughout the surface of the material (A) in an extended form. It is now assumed that the first coding information and the second coding information are identical to each other. When the coding information storing apparatus (B) is unintentionally hidden or fractured and its second coding information fails to be read out from the material (A), the first coding information on the material (A) can easily be accessed at any location other than the coding information storing apparatus (B). Accordingly, this allows the coding information on the material (A) to be read and analyzed with ease thus improving the efficiency of the decoding operation.

For example, when the material (A) is used as a check, securities, or a paper money, its containing coding information will hardly be decoded, deleted, or corrupted by the third person and hence protected from illegal forgery. As its coding information is decoded by any bank or authorized organization which holds the relationship between the first coding information and the information presenting substance, the check, securities, or paper money can correctly be discriminated from any false.

When the material (A) is attached to a product of the brand name or the tag joined with the brand, its coding information in the brand or tag are hardly decoded, deleted, or corrupted by the third person and can thus be protected from any illegal forgery. On the other hand, the coding information saved in the brand or tag can readily be decoded by a shop owner or assistant who acquires the relationship between the first coding information and the information presenting substance, hence discriminating the brand from any illegal forgery easily and assuredly.

When the materials (A) is attached to an industrial product, its coding information in the product are hardly decoded, deleted, or corrupted by the third person and can thus be protected from being fabricated with different, unauthorized materials. On the other hand, the encrypted saved in the industrial product can readily be decoded by the manufacturer which acquires the relationship between the first coding information and the information presenting substance, hence allowing the manufacturer to examine when, where, and how many the products have been purchased and proceed the market research or the counter action against claims with much ease. Also, when its coding information includes the details of the materials, the product can easily be decoded and sorted for reuse of the materials.

When the materials (A) is attached to the label of food product, its coding information in the label are hardly decoded, deleted, or corrupted by the third person and can thus be protected from illegal rewriting of the location and time of the production. On the other hand, the encrypted saved in the label of the food product can readily be decoded by the producer or merchandiser. This allows the food product to be examined when, where, and how it is produced and properly controlled throughout the route of distribution.

The material (A) may be attached to the label or the tag of any product as its first coding information and/or second coding information include the manner of processing and the requirements for storage of the product. The coding information in the label or tag can thus be used as an input or output signal for controlling the temperature to a desired degree in a processing or storage facility for refrigeration or heating up. For example, when having been stored at a refrigerating temperature, fruits remain as fresh as just after the harvest and may be increased in the tastiness. The fruits with the tag of the material (A) can be cooled or heated to a desired temperature for refrigeration or maturing process in the processing or the storage facility and then distributed at a controlled temperature in response to any change in the environmental conditions throughout the route of transportation. Similarly, fishery products can also be stored, processed, and distributed without declining their freshness under their optimum conditions determined by the coding information of the material (A).

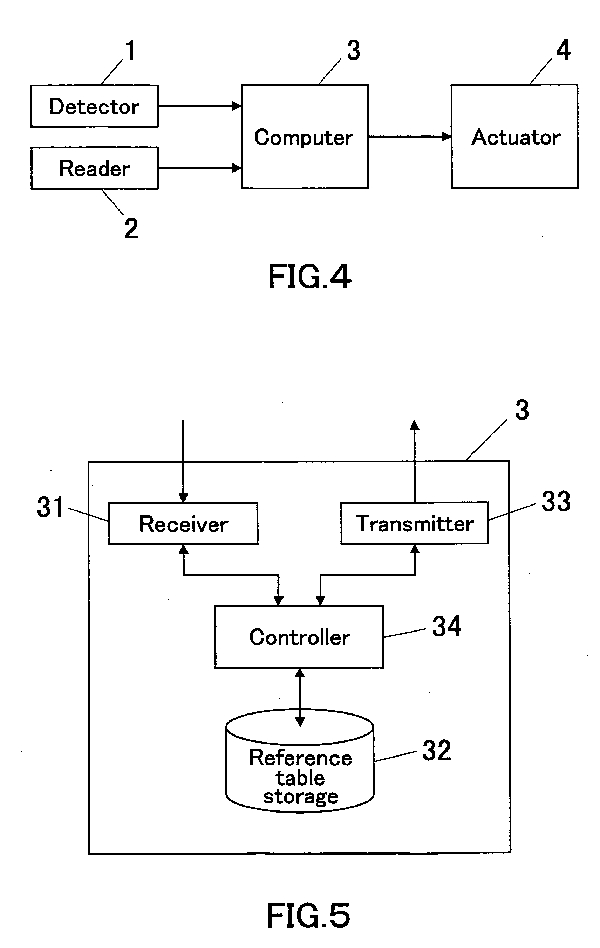

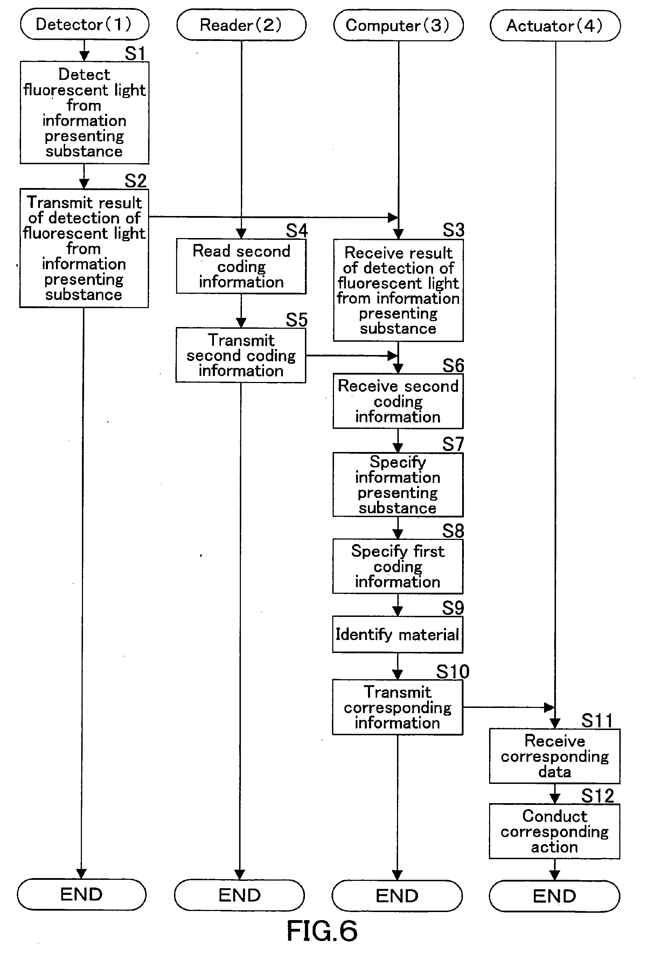

An identification system for identifying the material (A) will now be described referring to Figs. 4 and 5.

The identification system comprises, as shown in Fig. 4, a detector 1 for detecting fluorescent light emitted from the information presenting substance in the material (A), a reader 2 for reading the second coding information from the coding information storing apparatus (B) in the material (A), a computer 3 for identifying the material (A) through examining a detection output of the detector 1 and a read output of the reader 2, and an actuator 4 for carrying out an action in response to an identification output of the computer 3. The computer 3 may be communicated to the detector 1, the reader 2, and the actuator 4 over a network such as the Internet.

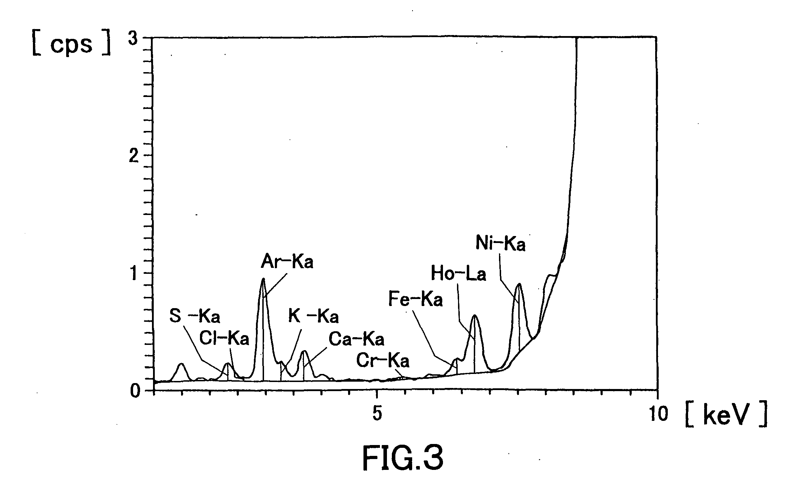

The detector 1 is provided for detecting the fluorescent light which is emitted from the information presenting substance in the material (A) when exposed to the electromagnetic wave at the predetermined wavelength range. The (fluorescent light from the information presenting substance) detection output of the detector 1 may be expressed by a spectrum measurement which represents an energy level of the information presenting substance along the horizontal axis (corresponding to the type of the information presenting substance) and an intensity of fluorescent light from the information presenting substance along the vertical axis (corresponding to the amount of the information presenting substance in the material (A)) as shown in Fig. 3. The fluorescent light output from the information presenting substance is then received by the computer 3. Preferably, the detector 1 is of a type designed for a technology of time-division spectrometry or modulation spectrometry using a combination of semiconductor laser and CCD.

The reader 2 is provided for reading the second coding information from the coding information storing apparatus (B) on the material (A). The second coding information read by the reader 2 is then transferred to the computer 3.

The computer 3 comprises, as shown in Fig. 5, a receiver 31 for receiving the detection output about the fluorescent light of the information presenting substance from the detector 1 and the second coding information from the reader 2, a reference table storage 32 in which saved is a reference table for determining the relationship between the information presenting substance and the first coding information such as shown in Fig. 3, a transmitter 33 for providing the actuator 4 with a specified control signal, and a controller 34 for controlling the entire action of the components.

The controller 34 may be a central processing unit (CPU) for transfer, calculation, and temporal storage of the information.

In this embodiment, the controller 34 has a function of identifying the information presentingsubstancefromthe detection output of the detector 1 which is received at the receiver 31 and represents information of the fluorescent light from the information presenting substance. Also, the controller 34 has a function of analyzing the first coding information of the identified information presenting substance through reviewing the reference table saved in the reference table storage 32. Moreover, the controller 34 has a function of identifying the material (A) through comparing between the first coding information and the second coding information received from the receiver 32.

The actuator 4 is provided for carrying out an action in response to the identification output of the computer 3. For example, when the material (A) is a cash card, a credit card, a check, a security a paper money, a brand, or a label of food product, the actuator 4 may be an apparatus equipped with a monitor and a speaker for displaying the forgery information.

When the material (A) is an industrial product, the actuator 4 may be a sorter for sorting the materials of the industrial product for recovery or reuse.

When the material (A) is an ID card for controlling the entrance of a particular room, the actuator 4 may be a door opening/closing apparatus.

When the material (A) is an electronic money or a prepaid card, the actuator 4 may be an electronic cash register.

When the material (A) is an ID card for use in a hospital, the actuator 4 may be a monitor or a printer for displaying or releasing patient file and medicine information.

When the material (A) is an ID card for public or residential service, the actuator 4 may be a monitor or a printer for displaying or issuing residential or stamp certifications.

Although the detector 1, the computer 3, and the actuator 4 are provided separately in the embodiment, their any combination of two or more may be applied as a single apparatus.

The action of the identification system will be described referring to a flowchart of Fig. 6. Each step in the flowchart is abbreviated to S throughout the description and drawings.

The flowchart starts with the detector 1 detecting the fluorescent light emitted from the information presenting substance on the material (A) when exposed to a predetermined wavelength range of electromagnetic wave (S1).

The resultant detection of the fluorescent light emitted from the information presenting substance is then transferred the detector 1 to the computer 3 (S2).

The resultant detection of the fluorescent light emitted from the information presenting substance transferred from the detector is received by the receiver 21 of the computer 3 (S3).

At the moment when or before or after the detector 1 detects the fluorescent light emitted from the information presenting substance, the reader 2 reads the second coding information of the coding information storing apparatus (B) on the material (A) (S4).

The second coding information read by the reader 2 is transferred to the computer 3 (S5).

The second coding information released from the reader 2 is received by the receiver 31 of the computer 3 (S6). The computer 3 specifies the information presenting substance information with a controller 34 from the resultant detection of the fluorescent light emitted from the information presenting substance which has been received by the receiver 31 (S7).

The computer 3 also specifies the first coding information corresponding to the information presenting substance information specified at S7 with the controller 34 through referring the reference table in the reference table storage 32 (S8).

The computer 3 then compares between the first coding information specified by the action of S8 and the second coding information received by the receiver 31 at S6 to identify the material (A) with the controller 34 (S9).

The computer 3 produces a control signal from the identification of the material (A) determined at S9 and transmits it to the actuator 4 (S10).

The actuator 4 receives the control signal from the computer 3 (S11) and conducts its responding action taught by the control signal such as displaying a variety of the measurements or sorting the materials (S12).

As a result, the user can readily obtain the first and second coding informations from the material (A) for ease of identification of the material (A).

While the first and the second coding information are read simultaneously or separately in the identification system of the embodiment, they may be handled in any manner; for example, the first coding information which is a fixed information is read as a key data before the second coding information is read.

Alternatively, a third coding information may be added to the first and second coding information for precise identification between a limited range of information, hence contributing to the implementation of various information read systems.

It is also possible in similar systems that a particular information is read and used for obtaining other information or operating other peripheral apparatuses, for example, that the first coding information is read and used as a key of encryption for rewriting the second coding information or that the first and the second coding information are read and used for determining the third coding information or operating the input/output apparatuses.

## Claims

1. A material containing coding information is **characterized in that**: an information presenting substance consisting mainly of at least one element or the compound thereof and assigned with a first coding information and a coding information storing means for storing a second coding information which is equal to or different from the first coding information.

2. The material containing coding information as recited in claim 1, wherein the information presenting substance is contained in the coding information storing means on the material.

3. The material containing coding information as recited in claim 1 or 2, wherein the coding information storing means is an integrated circuit memory.

4. An coding information storage apparatus **characterized by** the information presenting substance consisting mainly of at least one element or the compound thereof and assigned with a first coding information and a second coding information which is equal to or different from the first coding information.

5. A method of identifying a material containing coding information which includes an information presenting substance consisting mainly of at least one element or the compound thereof and assigned with the first coding information and the coding information storing means for storing the second coding information which is equal to or different from the first coding information, comprising the steps of:
exposing the material containing coding information to a predetermined wavelength range of electromagnetic wave, detecting fluorescent light emitted from the information presenting substance on the material when exposed to the electromagnetic wave, specifying the first coding information from the fluorescent light emitted from the information presenting substance, and reading the second coding information from the coding information storing means; and
identifying the material containing coding information with reference to the first coding information from the information presenting substance and the second coding information from the coding information storing means.

6. A system for identifying the material containing coding information which includes an information presenting substance consisting at least one element or the compound thereof and assigned with the first coding information and the coding information storing means for storing the second coding information which is equal to or different from the first coding information, comprising:
a reference table storing means for storing a reference table which determines the relationship between the first coding information and the information presenting substance;
a detecting means for detecting fluorescent light emitted from the information presenting substance on the material containing coding information which exposed to a predetermined wavelength range of electromagnetic wave;
an information presenting substance information specifying means for specifying information of the information presenting substance from the fluorescent light emitted from the information presenting substance and detected by the detecting means;
a coding information specifying means for specifying the first coding information corresponding to the information of the information presenting substance specified by the information presenting substance specifying means through examining the reference table storing means;
a coding information reading means for retrieving the second coding information from the coding information storing means; and
an identifying means for identifying the material containing coding information from a combination of the first coding information specified by the coding information specifying means and the second coding information retrieved by the coding information reading means.
